# Europäisches Patentamt
# European Patent Office
# Office européen des brevets

(19)

(11) Numéro de publication: **0 134 175**
**B1**

(12)

# FASCICULE DE BREVET EUROPÉEN

(45) Date de publication du fascicule du brevet:
**05.11.86**

(51) Int. Cl.⁴: **F 16 H 25/24,** F 16 J 15/40

(21) Numéro de dépôt: **84401648.5**

(22) Date de dépôt: **08.08.84**

(54) Ensemble vis et écrou à billes avec joints d'étanchéité.

(30) Priorité: **19.08.83 FR 8313481**

(43) Date de publication de la demande:
**13.03.85 Bulletin 85/11**

(45) Mention de la délivrance du brevet:
**05.11.86 Bulletin 86/45**

(84) Etats contractants désignés:
**CH DE GB IT LI SE**

(56) Documents cité:
**DE-A-2 537 713**
**US-A-4 153 259**

(73) Titulaire: **RATIER- FIGEAC, Société dite:, F-46100 Figeac (FR)**

(72) Inventeur: **Gaiani, Robert, Hauteval, F-46100 Figeac (FR)**

(74) Mandataire: **Loriot, Jacques, S.A. FEDIT- LORIOT (Cabinet Guerbilsky) 38 avenue Hoche, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 134 175 B1

## Description

L'invention concerne les ensembles vis et écrou à billes avec joints d'étanchéité utilisée pour la commande d'éléments mobiles et leur positionnement précis par mesure de l'angle de rotation de la vis au moyen de capteurs, de codeurs ou autres dispositifs appropriés, notamment dans le domaine des machines-outils.

Ces ensembles comportent: une vis et un écrou à filets ronds en creux situés l'un en regard de l'autre; des billes engagées partiellement, à la fois dans les filets de la vis et dans ceux de l'écrou; et deux joints annulaires d'étanchéité de profil conjugué de celui des filets de la vis qui s'étendent chacun sur une longueur axiale supérieure à un pas, et qui sont disposés respectivement dans deux gorges annulaires des deux extrémités de l'écrou de manière à coopérer avec les filets de la vis.

Dans les ensembles connus de ce genre par exemple du document DE A 2 537 713, le joint d'étanchéité est du type dit "râcleur", c'est-à-dire qu'il frotte en permanence contre les filets de la vis en vue d'éviter l'introduction de corps étrangers dans la zone de roulement des billes contre les filets de la vis et de l'écrou. Or, le frottement du joint contre les filets de la vis donne naissance à un couple résistant, ce qui, du point de vue fonctionnel, constitue déjà un inconvénient, puisque le principe de la vis à billes vise précisément à réduire les frottements le plus possible. De plus, lorsque le dispositif fonctionne d'une manière intensive, le frottement en question provoque un échauffement de la vis qui, par conséquent, subit une certaine dilatation, ce qui est préjudiciable à la précision de la machine à laquelle la vis à billes est incorporée et, s'il s'agit, par exemple, d'une machine-outil, cela peut conduire à des rebuts d'usinage.

Le but de l'invention est de réaliser un ensemble vis et écrou à billes du type en question qui ne présente pas les inconvénients précités du mode de réalisation qu'on vient de rappeler.

A cet effet, suivant l'invention. un jeu formant un interstice est ménagé entre les filets de la vis et la surface de chaque joint qui coopère avec lesdits filets, ledit interstice étant en communication permanente avec un conduit d'amenée d'air sous pression pratiqué dans l'écrou.

Grâce à cette conception particulière, il se forme entre le joint et la vis, un film d'air par laminage qui empêche toute introduction de particules étrangères dans l'écrou, bien qu'il n'y ait aucun contact matériel direct entre le joint et la vis. On bénéficie ainsi des avantages du joint râcleur classique, tout en éliminant ses inconvénients puisqu'il n'y a plus de frottement du joint contre la vis.

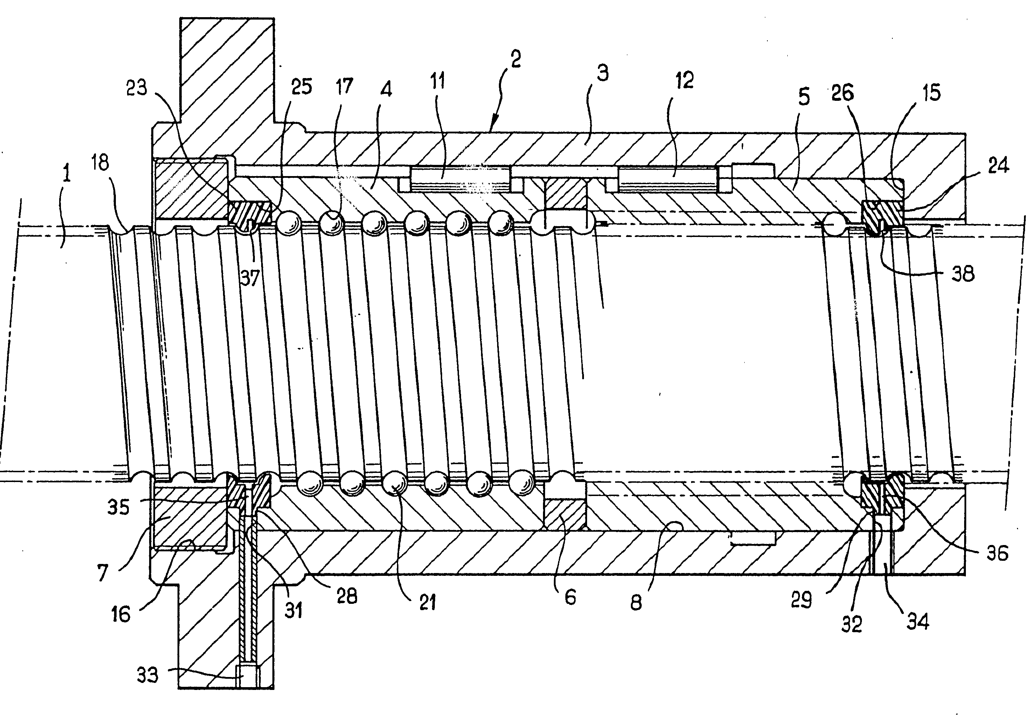

L'invention sera mieux comprise à la lecture de la description qui va suivre et à l'examen du dessin annexé dont la figure unique représente en coupe, à titre d'exemple, un mode de réalisation d'un ensemble vis et écrou à billes à joints d'étanchéité suivant l'invention.

Le dispositif représenté sur le dessin comporte une vis 1 et un écrou qui est désigné dans son ensemble par 2, mais qui, pour des raisons de fabrication, est formé de plusieurs pièces, à savoir: un corps 3, l'écrou proprement dit en deux parties 4, 5, une bague entretoise calibrée 6, et une bague filetée de blocage 7.

Les deux parties d'écrou 4, 5 sont logées dans un alésage cylindrique 8 du corps 3 dans lequel elles sont positionnées angulairement au moyen de deux clavettes 11, 12, respectivement. La partie d'écrou 5 s'appuie contre un épaulement annulaire 15 du corps 3 sous l'action de la bague filetée de blocage 7 qui est vissée dans un alésage d'entrée correspondant 16 du corps 3 et qui repousse l'autre partie d'écrou 4 et la bague entretoise calibrée 6 contre la partie d'écrou 5. Les filets ronds en creux de l'écrou sont désignés par 17 et le positionnement angulaire relatif des deux parties de l'écrou est évidemment tel que le filet de l'une des parties constitue un prolongement du filet de l'autre partie.

Les filets ronds en creux de la vis 1 sont désignés par 18 et se trouvent en regard des filets 17 de l'écrou. Des billes 21 sont engagées partiellement, à la fois, dans les filets 17 de l'écrou et dans les filets 18 de la vis. Il y a évidemment un certain jeu entre la surface extérieure de la vis 2 et l'alésage de l'écrou 4, 5 afin que la coopération entre ces deux pièces se fasse uniquement par l'intermédiaire des billes 21, c'est-à-dire par une action de roulement, à l'exclusion de tout frottement. L'épaisseur axiale de la bague entretoise calibrée 6 permet de doser avec précision la précharge des billes pour assurer l'élimination de tout jeu entre la vis et l'écrou. On n'a pas représenté les circuits classiques de recyclage des billes.

Dans chacune des deux extrémités de l'ensemble d'écrou 2, est disposé un joint annulaire d'étanchéité 23, 24 qui présente un profil conjugué de celui des filets de la vis et qui s'étend sur une longueur axiale supérieure à un pas. Dans l'exemple, le joint 23 est logé dans un embrèvement 25 de la partie d'écrou 4 et est retenu axialement vers l'extérieur par la bague filetée 7, tandis que l'autre joint 24 est logé dans un embrèvement 26 de l'autre partie d'écrou 5 et est retenu axialement vers l'extérieur par l'épaulement annulaire 15 du corps 3.

La surface intérieure de chacun des deux joints 23, 24, présente un profil conjugué de celui des filets de la vis; il importe donc que ces joints soient convenablement positionnés angulairement par rapport à l'écrou. A cet effet, leur surface extérieure présente un ergot 28 ou 29, respectivement, engagé dans un trou radial correspondant 31 ou 32 de la partie d'écrou correspondante 4 ou 5.

La caractéristique principale du dispositif suivant l'invention réside dans le fait que le joint ne frotte pas contre la vis, mais, qu'au contraire, un jeu formant interstice est ménagé entre les filets 18 de la vis et la surface adjacente du joint, et que cet interstice est en communication permanente avec un conduit 33 ou 34 d'amenée d'air sous pression (0,5 bars par exemple) qui traverse la paroi de l'ensemble d'écrou, c'est-à-dire le corps 3 et la partie d'écrou correspondante 4 ou 5. La communication entre l'interstice en question et le conduit d'amenée d'air correspondant est assurée, dans cet exemple, par un trou radial 35 ou 36 qui traverse le joint de part en part au droit du conduit d'amenée d'air correspondant et qui débouche dans une gorge annulaire 37 ou 38 pratiquée dans la surface intérieure du joint. Ainsi, il se forme, entre le joint et la vis un film d'air qui assure l'étanchéité de chaque extrémité de l'écrou. Dans l'exemple, le trou radial 35 ou 36 d'amenée d'air qui traverse le joint est coaxial à l'ergot 28 ou 29 de positionnement angulaire dudit joint.

## Revendications

1. Ensemble vis et écrou à billes avec joints d'étanchéité, comportant: une vis et un écrou à filets ronds en creux (17, 18) situés l'un en regard de l'autre; des billes (21) engagées partiellement, à la fois dans les filets de la vis et dans ceux de l'écrou; et deux joints annulaires d'étanchéité (23, 24) de profil conjugué de celui des filets de la vis, qui s'étendent, chacun, sur une longueur axiale supérieure à un pas, et qui sont disposés respectivement dans deux gorges annulaires des deux extrémités de l'écrou de manière à coopérer avec les filets de la vis, caractérisé en ce qu'un jeu formant un interstice est ménagé entre les filets (18) de la vis (1) et la surface de chaque joint (23, 24) qui coopère avec lesdits filets, ledit interstice étant en communication permanente avec un conduit d'amenée d'air sous pression (33, 34) pratiqué dans l'écrou (2).

2. Ensemble de vis et écrou à billes suivant la revendication 1, caractérisé en ce que le conduit d'amenée d'air sous pression (33, 34) pratiqué dans l'écrou (2) est situé au droit de chaque joint (23, 24) et en ce que la communication entre l'interstice précité et le conduit d'amenée d'air sous pression correspondant est constitué par un trou radial (35, 36) qui traverse le joint de part en part au droit du conduit d'amenée d'air.

3. Ensemble de vis et écrou à billes suivant la revendication 2, caractérisé en ce que le trou radial (35, 36) du joint débouche dans une gorge annulaire (37, 38) pratiquée dans la surface dudit joint qui coopère avec les filets (18) de la vis.

4. Ensemble de vis et écrou à billes suivant la revendication 2, caractérisé en ce que le trou radial (35, 36) d'amenée d'air qui traverse le joint est coaxial à un ergot (28, 29) de positionnement angulaire dudit joint.

## Patentansprüche

1. Kugelschraubgetriebe mit Dichtungen, umfassend: eine Spindel und eine Mutter mit einander gegenüberliegenden Rundhohlgewinden (17, 18); Kugeln (21), die mit den Windungen der Spindel und zugleich mit denen der Mutter teilweise in Eingriff stehen; und zwei Ringdichtungen (23, 24), die ein zum Profil des Spindelgewindes komplementäres Profil aufweisen, jeweils über eine axiale Länge von mehr als einer Teilung verlaufen und in zwei Ringnuten an den beiden Enden der Mutter so angeordnet sind, daß sie mit dem Spindelgewinde zusammenarbeiten, dadurch gekennzeichnet, daß zwischen dem Gewinde (18) der Spindel (1) und der mit diesem Gewinde zusammenarbeitenden Oberfläche jeder Dichtung (23, 24) ein einen Spalt bildender Spielraum vorgesehen ist, der mit einer in der Mutter (2) ausgeführten Druckluft-Zuführleitung (33, 34) in ständiger Verbindung steht.

2. Kugelschraubgetriebe nach Anspruch 1, dadurch gekennzeichnet, daß die in der Mutter (2) ausgeführte Druckluftzuführleitung (33, 34) in der Nähe der jeweiligen Dichtung (23, 24) angeordnet ist, und daß die Verbindung zwischen dem genannten Spalt und der entsprechenden Druckluft-Zuführleitung von einer Radialbohrung (35, 36) gebildet ist, die die Dichtung in der Nähe der Luftzuführleitung durchsetzt.

3. Kugelschraubgetriebe nach Anspruch 2, dadurch gekennzeichnet, daß die Radialbohrung (35, 36) der Dichtung in eine Ringnut (37, 38) mündet, die in der mit dem Spindelgewinde (18) zusammenarbeitenden Fläche der Dichtung ausgebildet ist.

4. Kugelschraubgetriebe nach Anspruch 2, dadurch gekennzeichnet, daß die die Dichtung durchsetzende Radialbohrung (35, 36) zur Luftzuführung koaxial zu einem die Dichtung winkelmäßig positionierenden Vorsprung (28, 29) verläuft.

## Claims

1. Ball screw and nut assembly with seals, comprising a screw and a nut with round recessed threads (17, 18) located opposite one another, balls (21) partially engaged both in the threads of the screw and in those of the nut, and two annular seals (23, 24) which are of a profile matching that of the threads of the screw and each extend over an axial length greater than one pitch and which are arranged respectively in two annular grooves of the two ends of the nut, so as to interact with the threads of the screw, characterized in that a clearance forming a gap is provided between the threads (18) of the screw (1) and the surface of each seal (23, 24) which interacts with the said threads, the said gap being in permanent communication with a compressed-air supply duct (33, 34) made in the nut (2).

2. Ball screw and nut assembly according to Claim 1, characterized in that the compressed-air supply duct (33, 34) made in the nut (2) is arranged in line with each seal (23, 24), and in that communication between the abovementioned gap and the corresponding compressed-air supply duct is made by means of a radial hole (35, 36) which passes right through the seal in line with the air supply duct.

3. Ball screw and nut assembly according to Claim 2, characterized in that the radial hole (35, 36) in the seal opens into an annular groove (37, 38) made in the surface of the said seal which interacts with the threads (18) of the screw.

4. Ball screw and nut assembly according to Claim 2, characterized in that the radial air supply hole (35, 36) passing through the seal is coaxial with a pin (28, 29) for the angular positioning of the said seal.